# EUROPEAN PATENT APPLICATION

(11) **EP 3 416 008 A1**
(43) Date of publication of application: **19.12.2018**
(21) Application number: 18176982.9
(22) Date of filing: 11.06.2018
(51) Int. Cl.: G05B 19/4099, G05B 13/04

(54) **METHOD FOR MODELING ADDITIVE MANUFACTURING OF A PART**

(30) Priority: 13.06.2017 US 201715621104
(71) Applicant: United Technologies Corporation, Farmington, CT 06032 (US)
(72) Inventor: ACHARYA, Ranadip, Rocky Hill, CT 06067 (US); STAROSELSKY, Alexander, Avon, CT 06001 (US); SHARON, John A., West Hartford, CT 06119 (US); EL-WARDANY, Tahany Ibrahim, Vernon, CT 06066 (US)
(74) Representative: Dehns

(57) **Abstract**

A method for modeling additive manufacturing of a part, includes (i) constructing a model (50) for estimating output (64) of a simulated additive manufacturing process based upon part design, energy equation (56) and at least one additional relationship selected from the group consisting of phase field equation (58), concentration equation (60) and stress equation (62); (ii) entering process operating parameters (54) into the model (50) to produce an output (64); (iii) comparing the output (64) to acceptance criteria to determine whether the output (64) is acceptable (68) or unacceptable (70); (iv) for acceptable output (68), adding operating parameters (54) which resulted in the acceptable output (68) to a process map for additive manufacturing the part; and (v) repeating steps (ii) through (iv) for different operating parameters (54) until the process map is complete.

## Description

### BACKGROUND

The present disclosure relates generally to additive manufacturing and, more particularly to a method for modeling additive manufacturing of a part to reduce crack propensity and residual stress.

Powder bed and directed energy additive manufacturing techniques are becoming more widely adopted for production of complex near-net-shape parts. Additive manufacturing offers increased design freedom and enables designers and engineers to create unique products.

Despite the advance of such technology, the challenge remains to repeatedly produce high quality components with minimal distortion, minimal residual stress and little or no amount of cracking and other defects. These issues are currently addressed by conducting expensive time and resource intensive experimentation whereby a component is produced and then analyzed using a trial and error approach, with results of the analysis leading to adjustments for the next attempt.

Energy-based approaches have been attempted and provide fast-acting process maps that result in correct computation of required energy density for sufficient melting of feedstock powders, and also for avoidance of the formation of pores. However, crack propensity in articles manufactured through additive manufacturing is highly non-linear, and the energy-based analysis is therefore in need of further improvement.

### SUMMARY OF THE DISCLOSURE

According to the disclosure a method for modeling additive manufacturing of a part comprises the steps of:
(i) constructing a model for estimating output of a simulated additive manufacturing process based upon part design, energy equation and at least one additional relationship selected from the group consisting of phase field equation, concentration equation and stress equation; (ii) entering process operating parameters into the model to produce an output; (iii) comparing the output to acceptance criteria to determine whether the output is acceptable or unacceptable; (iv) for acceptable output, adding operating parameters, which resulted in the acceptable output, to a process map for additive manufacturing the part; and (v) repeating steps (ii) through (iv) for different operating parameters until the process map is complete.

In a further non-limiting embodiment of the method, the output comprises an estimate of at least one of residual stress, microstructure and crack propensity of the part.

In a further non-limiting embodiment of the method, the model estimates output based upon the part design, energy equation, phase field equation, concentration equation and stress equation, and wherein the output comprises residual stress, microstructure and crack propensity of the part.

In a further non-limiting embodiment of the method, the part is a near net complex shaped part.

In a further non-limiting embodiment of the method, the model comprises a coupled solution of the energy equation and the at least one additional relationship.

In a further non-limiting embodiment of the method, the model comprises a coupled solution of the energy equation, the phase field equation, the concentration equation and the stress equation.

In a further non-limiting embodiment, the process map is used to produce a physical part.

A further non-limiting embodiment of the method comprises validating and calibrating the process model based upon characteristics of the physical part.

In a further non-limiting embodiment of the method, unacceptable output is not added to the process map.

In a further non-limiting embodiment of the method, unacceptable output is added to the process map to set boundaries related to unacceptable parts.

In a further non-limiting embodiment of the method, the operating parameters comprise laser, power, beam travel speed or velocity, hatch spacing, scan width and overhang.

In a further non-limiting embodiment of the method, the part is produced from an alloy.

In a further non-limiting embodiment, a method for additive manufacturing of a part comprises entering a part design into an additive manufacturing system programmed with a process map developed from part design, energy equation and at least one additional relationship selected from the group consisting of phase field equation, concentration equation and stress equation to produce a part according to the part design and the process map.

In a further non-limiting embodiment of this method, the part is a near net complex shaped part.

In a further non-limiting embodiment of this method, the part is produced from an alloy.

In a further non-limiting embodiment, a system for additive manufacturing of a part comprises an additive manufacturing system comprising a control unit programmed with a process map developed from a part design, energy equation and at least one additional relationship selected from the group consisting of phase field equation, concentration equation and stress equation to produce a part according to the part design and the process map, wherein said control unit is further programmed to operate an additive manufacturing machine at process parameters within the process map.

### BRIEF DESCRIPTION OF THE DRAWINGS

A detailed description follows, with reference to the attached drawings, wherein:
FIG. 1 schematically illustrates an additive manufacturing system;
FIGS. 2 and 3 show measured and phase-field model predicted primary dendrite arm spacings (PDAS) of an additive manufactured article;
FIG. 4 is a flow chart illustrating the method of the present disclosure; and
FIG. 5 schematically illustrates a process map produced in accordance with the present disclosure.

### DETAILED DESCRIPTION

The present disclosure relates to the field of additive manufacturing and, more particularly, to a method for modeling an additive manufacturing process models at different process in order to develop a process map or series of process models at different process parameters which can be used to produce actual physical products or workpieces with reduced crack propensity, reduced residual stress and a desirable microstructure.

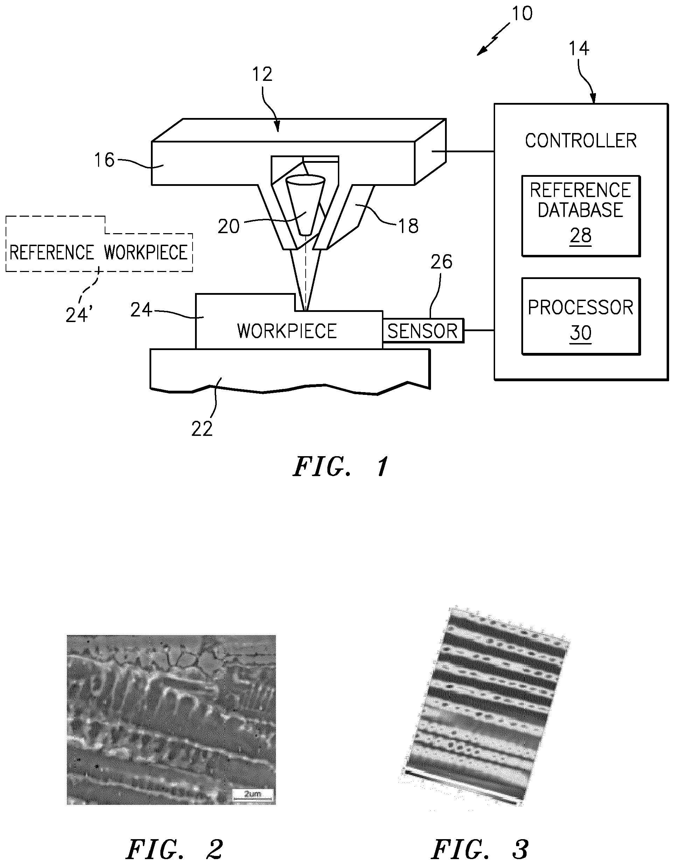

FIG. 1 illustrates a typical additive manufacturing system 10, which has an additive manufacturing tool 12 and a controller 14. Additive manufacturing tool 12 has a material reservoir 16, material dispensers 18, a laser guide 20, a platform 22 for a workpiece 24, and a sensor 26 which communicates with controller 14.

Controller 14 typically includes a reference database 28 and processor 30. Reference database 28 contains relevant data and processor 30 contains programming to control additive manufacturing tool 12 to produce parts as is known to a person of ordinary skill in the art.

The present disclosure is directed to producing a process map which includes models of a process at different process parameters to produce a "virtual machine" which can be used, when loaded into or accessed by reference database 28, to produce physical parts from system 10 with the desired low crack propensity, low residual stress and microstructure properties. The virtual machine can also be used in advance of manufacture of actual parts to model virtual parts and estimate results at intended process parameters.

Characteristics of a resulting product or workpiece from an additive manufacturing process can be accurately simulated and predicted. For example, FIG. 2 shows a measured primary dendrite arm spacing (PDAS) for a physical product in the order of 1-3 microns. FIG. 3 shows a phase field model predicted PDAS for a virtual structure corresponding to that of FIG. 2, with PDAS in the order of 2-5 microns. Thus, the predictive model is sufficiently accurate for use in analyzing results of a virtual additive manufacturing process.

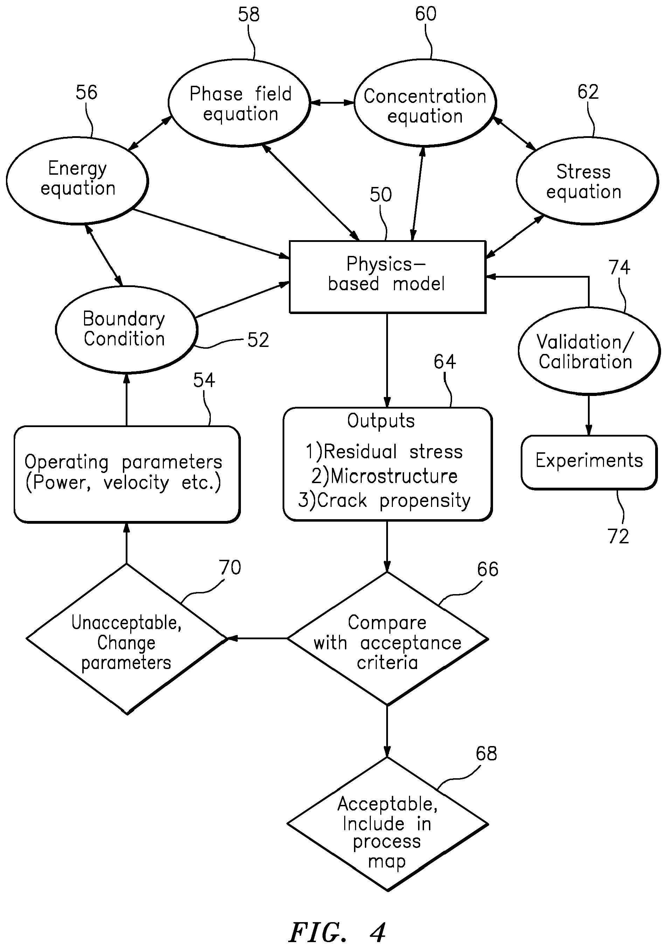

FIG. 4 schematically illustrates the method of the present disclosure, wherein an additive manufacturing process is modeled in order to produce a process map.

In a typical additive manufacturing process, the first step is to design a part, for example typically using a computer aided design (CAD) or other approach. The design so generated can then be entered into an additive manufacturing process to produce a corresponding part. In accordance with the present disclosure, however, this design is first used with a physics-based model receiving a combination of input including part design as well as energy equation, and some combination of phase field, concentration and stress equations, to produce a series of outputs at different operating parameters. These outputs can then be compared with acceptance criteria to determine whether the output is acceptable, and can be used to produce a sufficiently defect free component, or is unacceptable. The results of this comparison can then be used to construct a process map for controlling a system such as system 10 of FIG. 1. As discussed above, the process map includes models of process output at different process parameters. Significantly, the process map in question can be generated, for example by following the flow chart of FIG. 4, in a virtual environment without requirement of manufacturing any actual physical parts. Rather, the result of the flow chart of FIG. 4 is a virtual machine which can be used to produce a variety of virtual parts at different process parameters, each of which has simulated properties that can be evaluated and used to outline the various acceptable combinations of process parameters. This output helps to select suitable parameters for making actual parts.

Operating parameters to be set and used in this process can include, for example, laser, power, beam travel speed or velocity, hatch spacing, scan width, overhang and the like, in various desired combinations.

As shown in FIG. 4, a physics-based model 50 receives input from boundary conditions 52 and operating parameters 54 as well as an energy equation 56, a phase field equation 58, a concentration equation 60 and a stress equation 62 and any additional criteria which may be relevant to fracture propagation such as fatigue crack propagation curve and the like.

The boundary condition 52 and operating parameters 54 are related to the design of the part in question. The boundary condition is directly related to the structure of the part as well as the material from which the part is to be produced. The operating parameters can be set, either manually or through programming in a controller of the overall method of the present disclosure, to determine a complete process map through numerous iterations of the process.

The energy equation is the direct relation between energy used in the process and quality of the resulting output in terms of crack propensity, residual stress and microstructure of the product.

The phase field equation is an approach to analysis of complex relationships between non-linear variables, and also deals directly with behavior of material, in liquid, solid and gaseous phases, as well as the transition of the material between these phases.

The concentration equation is related to concentration of materials being used in the additive manufacturing process.

Finally, the stress equation is the relationship between various complexities in the shape of the part to be manufactured and stress generated in such parts due to this shape, operating parameters and other factors including, but not limited to, thermal stress.

According to the present disclosure, model 50 receives input from a coupled solution of the energy equation 56 and at least one of the phase field equation 58, concentration equation 60 and stress equation 62, as well as the boundary condition 52 and operators 54, to produce an output 64 which includes residual stress, microstructure properties and/or crack propensity for a part manufactured according to the boundary condition and operating parameters. These outputs can then be compared (step 66) with acceptance criteria in the form of acceptable amounts of residual stress, acceptable microstructure and/or acceptable crack propensity, to determine whether the resulting output would be acceptable or unacceptable. As shown in FIG. 4, acceptable results 68 lead to operating parameters for that boundary condition being added to a process map. Unacceptable output in step 70 leads to a manual or automated change in operating parameters and further iteration in model 50. Further, unacceptable output may also be included in the process map in order to set boundaries related to unacceptable parts as well.

This series of steps can be carried out as many times as is necessary to generate a substantially complete process map which can then be used as a virtual machine to test theoretical production of a part, and/or can be used to control a system 10 (FIG. 1) to produce actual physical parts with the benefit optimization of the process.

Still referring to FIG. 4, it should be appreciated that the output which is determined to be unacceptable can be ignored, in which case nothing further is done with that output and the process proceeds with changed parameters. Alternatively, output which is determined to be unacceptable can be added to the process map in a negative sense (i.e. a data point with bad results) to help define boundaries of specific operating parameters.

By producing a model which combines the various conditions and equations as discussed above, the very complex behavior of an additive manufacturing process can be accurately modeled to produce a virtual machine. The virtual machine can be used to simulate production of articles, and then evaluate the properties of such simulated articles, without the actual need for preparation of physical samples to be tested and evaluated as discussed in the background section above. This leads to faster and less costly determination of acceptable process parameters as compared to conventional methods.

Still referring to FIG. 4, once a suitable process map has been determined, experiments can be conducted as shown at step 72, and these experiments can be used for validation and calibration of model 50 as shown in step 74.

In one non-limiting embodiment, model 50 can use input from each of the equations 56, 58, 60, 62.

Further, the part to be manufactured can be made by various different additive manufacturing processes, and can be made from plastics, metals, metal alloys, and other materials known for use in additive manufacturing processes. Alloys are a particularly suitable material.

One non-limiting area of applicability of the present disclosure is in the manufacture of aircraft engine parts and components, such as gas turbine engine components.

Following the method outlined in FIG. 4, a method is provided wherein a process map for additive manufacturing is produced.

Initially, a model such as physics-based model 50 is constructed and programmed to estimate output of a simulated additive manufacturing process based upon part design, which can include boundary conditions and/or operating parameters. The model further includes energy equation and other considerations which can include phase field equation, concentration equation and stress equation.

An initial set of operating parameters can then be entered to the model, resulting in an output in terms of residual stress, microstructure and/or crack propensity of a part manufactured at the entered parameters.

This output can then be compared to acceptance criteria to identify acceptable output, which can be entered into a process map. Output identified as unacceptable can be ignored or used to help define boundaries of the process map.

These steps can then be repeated as necessary, with the model being adapted to parameters used, until a sufficiently complete process map has been generated.

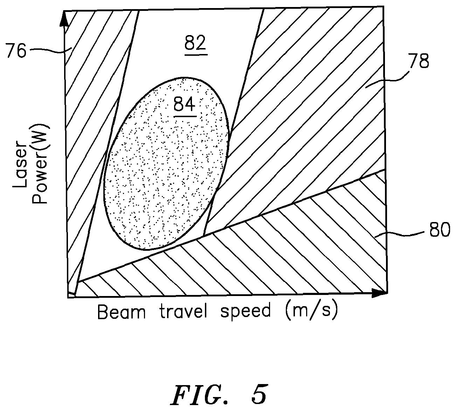

FIG. 5 shows a non-limiting example of a process map for an additive manufacturing process. The process map in this case presents product results as a relation of beam travel speed (m/s) and laser power (w). Plotting the results obtained with different parameters helps to identify the most probable regions corresponding to different defects 76, 78, 80 related to melting and solidification in a laser powder bed fusion process, as well as a defect-free region 82 with the least amount of probable defects. On the same plot, another region is also highlighted which represents a hypothetical region that yields deposit with minimum cracks, residual stress and distortion. Hence, combining these two regions to identify an overlap 84 of the crack-free region and the defect free region, parameters are identified which should yield additive manufactured parts containing a minimum amount of cracks and defects.

The present disclosure provides a novel and non-obvious method and system for one or more embodiments of the present disclosure have been described. Variations and modifications to the disclosed examples may become apparent to those skilled in the art that do not necessarily depart from the essence of this disclosure. For example, the exact combinations of virtual parameters to be used in constructing and optimizing the model can be any combination of factors as listed, and could be combined with additional factors as well. Accordingly, other embodiments are within the scope of the following claims.

## Claims

1. A method for modeling additive manufacturing of a part, comprising the steps of:
(i) constructing a model (50) for estimating output (64) of a simulated additive manufacturing process based upon part design, energy equation (56) and at least one additional relationship selected from the group consisting of phase field equation (58), concentration equation (60) and stress equation (62) ;
(ii) entering process operating parameters (54) into the model (50) to produce an output (64);
(iii) comparing the output (64) to acceptance criteria (66) to determine whether the output (64) is acceptable (68) or unacceptable (70);
(iv) for acceptable output (68), adding operating parameters (54), which resulted in the acceptable output (68), to a process map for additive manufacturing the part; and
(v) repeating steps (ii) through (iv) for different operating parameters (54) until the process map is complete.

2. The method of claim 1, wherein the output (64) comprises an estimate of at least one of residual stress, microstructure and crack propensity of the part.

3. The method of claim 1 or 2, wherein the model (50) estimates output (64) based upon the part design, energy equation (56), phase field equation (58), concentration equation (60) and stress equation (62), and the output (64) comprises residual stress, microstructure and crack propensity of the part.

4. The method of claim 1, 2 or 3, wherein the part is a near net complex shaped part.

5. The method of any preceding claim, wherein the model (50) comprises a coupled solution of the energy equation (56) and the at least one additional relationship.

6. The method of any of claims 1 to 4, wherein the model (50) comprises a coupled solution of the energy equation (56), the phase field equation (58), the concentration equation (60) and the stress equation (62).

7. The method of any preceding claim, further comprising using the process map to produce a physical part.

8. The process of claim 7, further comprising validating and calibrating (74) the model (50) based upon characteristics of the physical part.

9. The method of any preceding claim, wherein unacceptable output (70) is not added to the process map.

10. The method of any of claims 1 to 8, wherein unacceptable output (70) is added to the process map to set boundaries related to unacceptable parts.

11. The method of any preceding claim, wherein the operating parameters (54) comprise laser, power, beam travel speed or velocity, hatch spacing, scan width and overhang.

12. A method for additive manufacturing of a part, comprising entering a part design into an additive manufacturing system (10) programmed with a process map developed from part design, energy equation (56) and at least one additional relationship selected from the group consisting of phase field equation (58), concentration equation (60) and stress equation (62) to produce a part according to the part design and the process map.

13. The method of claim 12, wherein the part is a near net complex shaped part.

14. The method of any preceding claim, wherein the part is produced from an alloy.

15. A system for additive manufacturing of a part, comprising an additive manufacturing system (10) comprising a control unit (14) programmed with a process map developed from a part design, energy equation (56) and at least one additional relationship selected from the group consisting of phase field equation (58), concentration equation (60) and stress equation (62) to produce a part according to the part design and the process map, wherein said control unit (14) is further programmed to operate an additive manufacturing machine (12) at process parameters within the process map.
